# EUROPÄISCHE PATENTSCHRIFT

(11) **EP 3 056 956 B1**
(45) Veröffentlichungstag und Bekanntmachung des Hinweises auf die Patenterteilung: **31.03.2021**
(21) Anmeldenummer: 15195137.3
(22) Anmeldetag: 18.11.2015
(51) Int. Cl.: G05B 19/418, B65H 39/02, B65H 43/00

(54) **VERFAHREN ZUR DEZENTRALEN STEUERUNG VON BEARBEITUNGSMASCHINEN**
METHOD FOR THE DECENTRALIZED CONTROL OF OPERATING MACHINES
PROCEDE DE COMMANDE DECENTRALISEE DE MACHINES D'USINAGE

(30) Priorität: 23.12.2014 CH 20172014
(43) Veröffentlichungstag der Anmeldung: 17.08.2016
(73) Patentinhaber: Ferag AG, 8340 Hinwil (CH)
(72) Erfinder: Uwe, GROTH, 8342 Wernetshausen (CH)
(74) Vertreter: IPrime Rentsch Kaelin AG

(56) Entgegenhaltungen:
- EP-A1- 1 699 020
- EP-A1- 1 911 583
- EP-A1- 2 433 808
- WO-A1-01/80146
- WO-A1-01/89818
- US-A1- 2011 025 458

## Beschreibung

### TECHNISCHES GEBIET

Die Erfindung bezieht sich auf ein Verfahren zur Steuerung von Maschinen, welche für die Bearbeitung von Objekten vorgesehen sind.

### STAND DER TECHNIK

Bei der Bestellung von Artikeln wie z.B. Elektronikartikel, Kleider, etc. ist es bekannt, die Postzustellung in einer an den Kunden gerichteten E-Mail zu bestätigen und darin zugleich eine URL (URL: Unified Resource Locator) anzugeben, welche auf eine Resource des betreffenden Postdienstes zeigt und den Zustellverlauf der Postsendung verfolgen lässt. Typische Verlaufsstationen einer Postsendung umfassen die Übergabe der Sendung beim Postdienst, Eintreffen der Sendung in einem Verteilzentrum, Eintreffen der Sendung bei einem Zustelldienst und Übergabe der Sendung bei der Zustelladresse. Der Postdienst führt die über den URL zugreifbare Resource jeweils entsprechend nach, so dass der Kunde stets den aktualisierten Zustellverlauf verfolgen kann. Bei den einzelnen Stationen erfolgen neben dem Empfang, dem Weitertransport, der Sortierung, dem Erfassen/Anbringen von Informationen, etc. keine Arbeitsschritte, die am Inhalt der Postsendung vorgenommen werden und diesen verändern.

Bei der Bestellung von konfigurierbaren Konsumgütern wie einem Computer, einem Möbel, etc. ist es bekannt, einem Konsumenten eine entsprechende ausfüllbare Bestellmaske zur Verfügung zu stellen, oftmals über den Zugriff über eine URL. Der Konsument füllt die Bestellmaske aus und wählt damit z.B. Computertyp, Prozessor, Speichergrösse, Grafikkartentyp, etc. eines gewünschten Computers. Nach dem Ausfüllen der Bestellmaske wird eine Spezifikation des Konsumguts erstellt und an einen Produktions- oder Auslieferungsdienst übermittelt, wobei das entsprechende Konsumgut gemäss Spezifikation für den Konsumenten hergestellt und diesem zugestellt wird.

Bei der Laborauswertung von Proben wie z.B. Blutproben, Lebensmittelproben, Bodenproben, etc. wird an einer Probe ein eindeutiger Identifikationscode angebracht, beispielsweise in der Form eines Barcodes. Zur Auswertung werden an der Probe erforderliche Arbeitsschritte vorgenommen, welche mittels des Identifikationscodes in einer zentralen Datenbank protokolliert werden, zusammen mit den Auswertungsresultaten .

Bei der Zusammenstellung von Kundenbestellungen beispielsweise im Online Versandhandel werden verschiedene Kundenartikel in einem Versandbehälter angeordnet. Die Kundenbestellung wird in einer Versandzentrale verarbeitet, welche das Zusammenstellen der Kundenartikel im Versandbehälter zentral steuert.

Bei der Zusammenstellung von Druckprodukten beispielsweise im Bereich des Zeitungsdrucks werden verschiedene Beilagen in einem Hauptprodukt eingesteckt. Das Zusammenstellen der Druckprodukte wird von einer Steuerzentrale überwacht, welche die einzelnen Arbeitsschritte zentral steuert.

Bei den bekannten automatisierten Systemen zum Durchführen der oben genannten Be- und Verarbeitungsverfahren sind die an der Bearbeitung beteiligten Maschinen und Anlagen üblicherweise mit einer zentralen Steuerung verbunden, die die einzelnen Arbeitsschritte in Echtzeit steuert.

Bei komplexen Systemen bedingt dies leistungsfähige Bus- und Steuersysteme, die kostspielig und mit zunehmender Komplexität auch störanfällig sind. Die direkte und andauernde Verbindung der Maschinen und Anlagen mit der zentralen Steuerung macht solche Systeme zudem anfälliger für Angriffe mit Schadsoftware, die in letzter Zeit auch bei Industrieanlagen stark zugenommen haben.

Bei einer segmentierten Bearbeitung, das heisst einer Bearbeitung an verschiedenen Standorten und/oder einer Bearbeitung durch verschiedene Unternehmen, stellen sich zusätzliche Probleme in Bezug auf die Sicherheit der Produktions- und Kundendaten.

EP 1911583 A1 offenbart ein Verfahren zur Herstellung eines Druckprodukts. Das Druckprodukt in Form eines Hauptproduktes oder eines Teilproduktes wird mit einem Identifikationsmittel versehen, dass eine individualisierbare produktspezifische Information umfasst. Es werden mindestens zwei nachgeschaltete Individualisierungsschritte durchgeführt. Das Identifikationsmittel erlaubt die Zuordnung der in den Individualisierungsschritten zuzufügenden Informationen zum jeweiligen Produkt. Die Identifikationsmittel können neben der produktspezifischen Identifizierungsinformation auch Steuerinformation umfassen, die von Sensoren einer Bearbeitungseinrichtung ausgelesen werden und die Bearbeitungseinrichtung direkt steuern, und es im Zusammenwirken mit Kontrollcodes auf den zuzuführenden Teilprodukten erlauben, die korrekte Zuführung zu kontrollieren.

EP 1699020 A1 zeigt eine Verpackungsrücknahmevorrichtung für Einwegverpackungen, an denen ein optisch lesbarer Code und/oder ein RFID-Tag angebracht ist. Die Vorrichtung umfasst eine Aufnahmeeinrichtung, eine Leseeinrichtung, die zum Lesen der Codes und/oder RFID-Tags und zum Entschlüsseln von darin enthaltenen Kennungsdaten ausgebildet ist, eine der Leseeinrichtung nachgeschalteten Klassifizierungseinrichtung zur Klassifizierung aufgenommener Verpackungen und eine der Aufnahmeeinrichtung nachgeschaltete Sortiereinrichtung. Die Klassifizierungseinrichtung klassifiziert die aufgenommenen Verpackungen aufgrund einer Vergleichs-Auswertung der gelesenen Kennungsdaten oder daraus gewonnenen Verpackungs-Beschaffenheitsdaten mit einer Vielzahl von Datensätzen, die in einer Datenbank der Vorrichtung gespeichert sind. Die lokale Datenbank wird jeweils durch eine zentrale Datenbank aktualisiert.

WO 01/89818 A1 zeigt eine Anlage zur gleichzeitigen Herstellung verschiedener Typen von Fahrzeugreifen in einer Abfolge von Arbeitsschritten an verschiedenen Arbeitsstationen. Trommeln zur Herstellung eines spezifischen Typs von Reifen werden von einer Arbeitsstation zur nächsten weitergereicht. Die Trommeln weisen einen Code auf, welcher den Reifentyp kennzeichnet. Die Arbeitsstationen lesen den Code der Trommel aus und selektieren die zum entsprechenden Reifentyp gehörenden Arbeitsvorgänge.

WO 01/80146 A1 zeigt ein Produkt- und Materialinformationskommunikationssystem, insbesondere zur Verwendung in Herstellungsprozessen. Eine Produktverpackung oder ein Träger weist einen RFID-Tag auf, mit einem Datenspeichermittel zum Speichern eines eindeutigen Identifikationscodes für das Produkt und von dynamischen oder statischen Daten, die mit Merkmalen des Produkts verbunden sind, die sich auf die Verwendung des Produkts in einem beabsichtigten Herstellungsprozess beziehen. Eine Abfrageeinheit ruft den Identifikationscode und die Produktmerkmalsinformationen ab und stellt diese für Prozesssteuerungseinrichtungen bereit.

US 2011/0025458 A1 zeigt ein System zur effizienten und sichereren Authentifizierung von RFID-Tags. Eine Leseeinheit liest aus dem RFID-Tag eine eindeutige ID aus, und übergibt diese an eine andere Einheit, beispielsweise eine Datenbank, welche der Leseeinheit einen der ID zugeordneten Link zurückgibt. Diesen Link übergibt die Leseeinheit wiederum an eine weitere Einheit, beispielsweise eine Datenbank, welche der Leseeinheit ein dem Link zugeordnetes Datenobjekt zurückgibt.

EP 2433808 A1 zeigt ein Verfahren zur Herstellung von individuell zusammengestellten Druckprodukten aus einem Mantelprodukt und mindestens einer Beilage. Das Mantelprodukt weist ein optisch wahrnehmbares Erkennungszeichen auf.

### Darstellung der Erfindung

Eine Aufgabe der Erfindung besteht darin ein Verfahren zur Steuerung von Maschinen für die Bearbeitung von Objekten zur Verfügung zu stellen, das die oben genannten Probleme löst oder zumindest verringert.

Diese Aufgabe wird durch das im unabhängigen Patentanspruch 1 definierte Verfahren gelöst.

Das erfindungsgemässe Verfahren zur Steuerung von Maschinen, welche für die Bearbeitung von Objekten vorgesehen sind, umfasst: Einbringen eines Objekts in einen Arbeitsbereich einer Maschine; Zugreifen in einer lokalen Umgebung der Maschine mit einem Lesegerät auf einen dem Objekt zugeordneten Prozessschlüssel, welcher zumindest einen Unified Resource Identifier (URI) enthält; wobei der Unified Resource Identifier auf eine zentrale Ressource zeigt, die in einer den Maschinen zugeordneten Zentrale definiert ist, und wobei die zentrale Ressource einen Verweis enthält, der auf eine globale Ressource zeigt, die global zugreifbar ist; Bearbeitung des Objekts durch die Maschine unter Verwendung des im Prozessschlüssel enthaltenen enthaltenen Unified Resource Identifiers; wobei zur Bearbeitung des Objekts auf die globale Ressource zugegriffen wird, auf welche der Verweis zeigt, welcher in der zentralen Ressource enthalten ist, auf welche der im Prozessschlüssel enthaltene Unified Resource Identifier zeigt.

Entsprechende Bearbeitungsmaschinen sind insbesondere Verpackungsmaschinen oder -stationen, wie beispielsweise Folierstationen, Beschriftungsmaschinen oder -stationen, Zusammentragvorrichtungen, Sortierer, Wegsteuerungen für Fördersysteme, Ein-/Auslagersysteme, Bearbeitungsmaschinen, namentlich solche im Bereich der Druckweiterverarbeitung, wie Sammelmaschinen, Einsteck- oder Schneidmaschinen.

Die URI kann schon ohne Zugriff auf die Resource, auf welche die URI zeigt, Aufschluss geben über die Bearbeitung, die am Objekt vorzunehmen ist.

Zur Bearbeitung des Objekts wird auf die Resource zugegriffen, auf welche die im Prozessschlüssel enthaltene URI zeigt. Die URI kann auf eine lokale oder globale Resource zeigen. Dadurch lassen sich die Maschinen zur Bearbeitung von Objekten sehr flexibel steuern, ohne dass ein zentrale Steuerung vorhanden sein muss.

In einer Variante zeigt die URI auf eine lokale Resource, die in einer lokalen Umgebung der Maschinen definiert ist. Die Resource ist beispielsweise in einer der Maschine zugeordneten Datenbank abgespeichert.

Die URI zeigt auf eine zentrale Resource, die in einer den Maschinen zugeordneten Zentrale definiert ist. Die Resource ist beispielsweise in einer der Zentrale zugeordneten Datenbank abgespeichert.

Die genannte zentrale Resource enthält einen Verweis, welcher auf eine globale Resource zeigt, die global zugreifbar ist. Die Resource ist beispielsweise auf einem global verfügbaren Webserver abgespeichert.

Beispielsweise kann in einer Zentrale für eine bestimmte Resource hinterlegt sein, dass der Zugriff an eine globale Resource weitergeleitet wird.

In einer Variante zeigt die URI auf eine Resource, die für die Bearbeitung des Objekts erforderliche Bearbeitungsparameter für die Maschine enthält. Durch den Zugriff auf die Resource werden die Bearbeitungsparameter zur Verfügung gestellt.

In einer Variante zeigt die URI auf eine gesicherte Resource, welche für den Zugriff eine Authentifizierung und/oder einen elektronischen Schlüssel erfordert. Dadurch wird ein unerwünschter oder unerlaubter Zugriff verhindert.

In einer Variante umfasst das Verfahren weiter: Abspeichern von Daten im Prozessschlüssel und/oder in der Resource, auf welche die im Prozessschlüssel enthaltene URI zeigt. Die an einem Objekt vorgenommen Bearbeitung kann beispielsweise protokolliert werden.

In einer Variante erfolgt das Einbringen eines Objekts in den Arbeitsbereich einer Maschine durch ein Fördermittel, wie ein Förderband, oder einen Förderer, wie ein Hängeförderer. Robuste und kostengünstige Transporteinrichtungen können für das Einbringen eines Objekts in den Arbeitsbereich zur Anwendung kommen.

In einer Variante wird auf einen am Objekt angebrachten Prozessschlüssel zugegriffen, insbesondere auf einen optisch lesbaren ein- oder zweidimensionalen Barcode und/oder auf einen funkbasiert lesbaren RFID-Tag. Durch das Anbringen am Objekt ist eine dauerhafte Zuordnung zwischen dem Objekt und dem Prozessschlüssel sichergestellt.

In einer Variante wird bei der Bearbeitung des Objekts diesem mindestens ein weiteres Objekt hinzugefügt.

In einer Variante sind mindestens zwei Maschinen in getrennten Bereichen beteiligt. Getrennte Bereiche können dadurch definiert sein, dass zwischen ihnen die Objekte in einem Zwischenspeicher gelagert werden.

In einer Variante ist das Objekt ein Hauptprodukt oder ein dem Hauptprodukt hinzuzufügendes Teilprodukt einer Produktzusammenstellung.

In einer Variante ist das Objekt ein Kundenbehältnis oder ein dem Kundenbehältnis hinzuzufügender Kundenartikel einer Produktzusammenstellung. Ein Kundenbehältnis kann eine Tasche, ein Beutel, ein Container, wie eine Wanne oder eine Kiste, oder Korb oder auch eine grössere Einheit sein.

### KURZE BESCHREIBUNG DER ZEICHNUNG

Anhand von Figur, welche lediglich Ausführungsbeispiele darstellt, wird die Erfindung im Folgenden erläutert. Es zeigt:

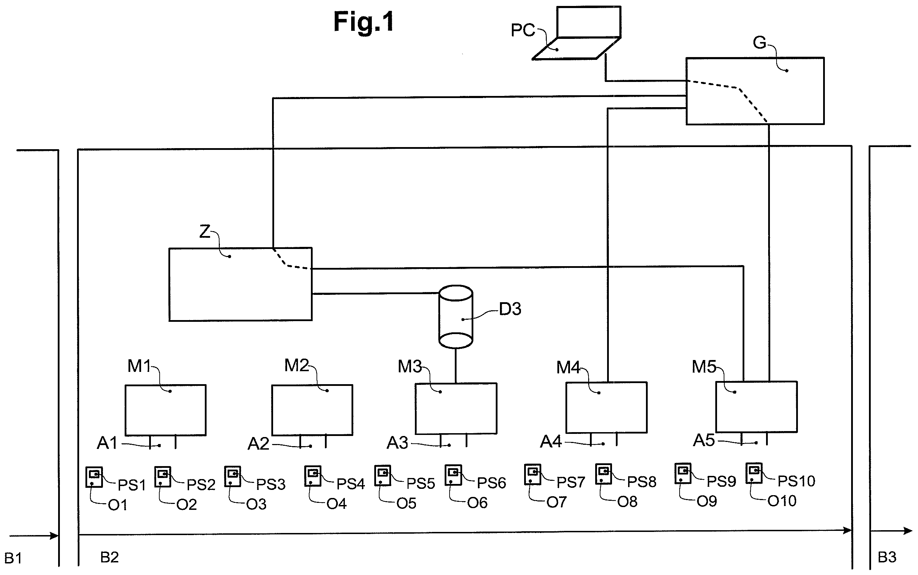

- Fig. 1: schematisch einen Arbeitsablauf mit verschiedenen Arbeitsschritten die durch Maschinen an einem mit einem Prozessschlüssel versehenen Objekt vorgenommen werden.

### WEG(E) ZUR AUSFÜHRUNG DER ERFINDUNG

Figur 1 zeigt schematisch eine erste Ausführungsform eines Verfahrens zum Steuern von Maschinen M1, M2, ..., welche zum Bearbeiten eines Objekts vorgesehen sind. Das Objekt ist beispielsweise eine Zeitung, in welche Beilagen einzustecken sind. Das Objekt ist beispielsweise ein Kundenbehältnis, in welche Kundenartikel einzufüllen sind. Das Objekt ist beispielsweise ein Versandbehälter, in welchem Versandartikel anzuordnen sind. Das Objekt ist beispielsweise eine Beilage, welche für das Einstecken in eine Zeitung vorgesehen ist. Das Objekt ist beispielsweise ein Kundenartikel, welcher für das Einfüllen in ein Kundenbehältnis vorgesehen ist. Das Objekt ist beispielsweise ein Versandartikel, welcher für das Anordnen in einem Versandbehälter vorgesehen ist.

Wie in Figur 1 schematisch dargestellt, sind die Maschinen M1, M2, ... vorgesehen, um an einem Objekt 01, 02, ... nacheinander Bearbeitungsschritte durchzuführen. Eine Maschine kann vorgesehen sein, um eine Beilage in eine Zeitung einzustecken. Eine Maschine kann vorgesehen sein, um einen Kundenartikel in ein Kundenbehältnis einzufüllen. Eine Maschine kann vorgesehen sein, um einen Versandartikel in einem Versandbehälter anzuordnen. Eine Maschine kann vorgesehen sein, um eine Beilage für das Einstecken in eine Zeitung vorzubereiten. Eine Maschine kann vorgesehen sein, um einen Kundenartikel für das Einfüllen in ein Kundenbehältnis vorzubereiten. Eine Maschine kann vorgesehen sein, um einen Versandartikel für das Anordnen in einem Versandbehälter vorzubereiten.

Eine besonders bevorzugte Verwendung des erfindungsgemässe Verfahren liegt im Bereich der Druckweiterverarbeitung, insbesondere unter Verwendung von Zusammentragvorrichtungen. Diesfalls sind die gezeigten Maschinen M1, M2, ... Verpackungsmaschinen oder -stationen, insbesondere Folierstationen, Beschriftungsmaschinen oder -stationen, Lager, Pufferstationen, Sortierer, Wegsteuerungen für Fördersysteme, Ein- und Auslagersysteme und Druckweiterverarbeitungsanlagen, wie insbesondere Sammelmaschinen, Einsteck- oder Schneidmaschinen.

Wie in Figur 1 schematisch dargestellt, werden Objekte O1, O2, ... von den Maschinen M1, M2, ... nacheinander bearbeitet. Die Objekte O1, O2, ... werden auf einem Fördermittel, hier beispielsweise auf einem Förderband, an einem Förderer, beispielsweise einem Hängeförderer, oder entsprechenden Mitteln von einer Maschine zur nächsten Maschine befördert. Die Objekte O1, O2, ... werden beispielsweise von an den Maschinen angebrachten Vorrichtungen wie z.B. Roboterarmen von einer Maschine M1 zu einer nächsten Maschine M2 befördert. Ein Objekt O1 wird beispielsweise stationär gehalten und die Maschinen M1, M2, ... werden nacheinander am stationären Objekt 01 vorbei befördert.

Wie in Figur 1 schematisch dargestellt, sind den Objekten O1, O2, ... typischerweise jeweils betreffende Prozessschlüssel PS1, PS2, ... zugeordnet. Ein Prozessschlüssel PS1, PS2, ... ist beispielsweise an einem Objekt O1, O2, ... aufgedruckt, angebracht, angeklebt, lösbar verbunden, etc. Ein Prozessschlüssel PS1, PS2, ... ist beispielsweise an einer Klammer angebracht eines Klammerförderers bzw. Hängeförderers zum Fördern der Objekte O1, O2, ....

In einer Variante ist ein Prozessschlüssel PS1, PS2, ... als optisch lesbarer Code ausgebildet, beispielsweise als ein- oder zweidimensionaler Barcode.

In einer Variante ist ein Prozessschlüssel PS1, PS2, ... als funkbasiert lesbarer Tag ausgebildet, beispielsweise als RFID-Tag (RFID: Radio Frequency Identification).

In einer Variante ist der Prozessschlüssel PS1, PS2, ... schreibbar ausgebildet. Ein optisch lesbarer Code, welcher beispielsweise auf einem Objekt O1, O2, ... aufgedruckt ist, lässt sich durch Aufdrucken weiterer Teile ergänzen oder durch einen an einer anderen Stelle des Objekts O1, O2, ... aufgedruckten optisch lesbaren Code ersetzen, wobei in einer Variante der ursprüngliche optische Code beispielsweise durch Aufdrucken von entsprechenden Teilen ungültig markiert werden kann. Ein als funkbasiert lesbarer Tag, also beispielsweise ein RFID-Tag, kann schreibbar ausgeführt sein, wobei die im Tag gespeicherten Daten überschrieben, ergänzt, ersetzt, etc. werden können.

Der Zugriff auf den Prozessschlüssel erfolgt jeweils durch ein entsprechendes Lesegerät, welches typischerweise bei den Maschinen M1, M2, .. vorgesehen ist. Für den Zugriff auf einen optischen Code ist ein optisches Lesegerät wie z.B. eine Fotokamera vorgesehen. Für den Zugriff auf einen funkbasiert lesbaren Tag ist ein funkbasiertes Lesegerät wie beispielsweise ein RFID-Lesegerät vorgesehen. Zum Schreiben eines optischen Codes kann an einer betreffenden Maschine M1, M2, ... ein Drucker vorgesehen sein. Das RFID-Lesegerät kann als RFID-Lese/Schreibgerät ausgeführt sein und für das Schreiben eines RFID-Tags ausgebildet sein.

Ein Prozessschlüssel PS1, PS2, ... umfasst mindestens eine URI (URI: Uniform Resource Identifier).

Ein Uniform Resource Identifier ist nach bekanntem Schema wie folgt aufgebaut:
URI = scheme ":" hier-part ["?" query] ["#" fragment]

Die Komponenten des Uniform Resource Identifier sind im folgenden Beispiel aufgeführt.
foo://example.com:8042/over/there?name=ferret#nose

Die Resource umfasst ein Scheme, welches den Kontext definiert und den Typ des URI bezeichnet. Bekannte Scheme sind beispielsweise die Protokolle http und ftp. Direkt darauf folgen ein Doppelpunkt und ein Pfad zur Verortung der Ressource.

Der Pfad umfasst eine Authority (also z.B. example.com:8042), einen Path (also z.B. /over/there), eine Query (also z.B. ?name=ferret) und ein Fragment (also z.B. #nose).

Die Authority kann einen Host bezeichnen und kann Benutzerangaben enthalten. Der Path enthält Angaben, die eine Resource identifizieren. Die Query beinhaltet Daten zur Identifizierung von Resourcen, welche durch die Angabe des Path nicht genau verortet werden können. Das Fragment referenziert eine Stelle innerhalb einer Resource.

Ein Prozessschlüssel PS1, PS2, ... umfasst in einer Variante neben dem URI beliebige weitere Daten wie z.B. eine kurze oder ausführliche Beschreibung des Objekts O1, O2, ..., an welchem der Prozessschlüssel PS1, PS2, ... angebracht ist, Steueranweisungen für Maschinen M1, M2, ..., etc. Eine kurze Beschreibung eines Objekts O1, O2, ... kann eine Objektklasse, einen Objekttyp, etc. umfassen. Eine ausführliche Beschreibung eines Objekts O1, O2, ... kann Objektdaten wie Produktionsdatum, Angaben über die Schnittstellen des Objekts, Angaben über die Lebensdauer, etc. umfassen.

Die URI kann gemäss unterschiedlichen Formen ausgebildet sein, welche anhand der nachfolgenden Beispiele erklärt werden. Dabei ist eine Maschine M für die Bearbeitung eines Objekts O vorgesehen, wobei dem Objekt O ein Prozessschlüssel PS zugeordnet ist, der die URI enthält.

In einer ersten Form ist die URI gemäss dem Schema M.local/f/s ausgebildet. Dadurch wird spezifiziert, dass die für die Bearbeitung eines Objekts erforderliche Resource lokal auf der Maschine M definiert ist. Dies wird durch die Authority M.local spezifiziert, welche auf die Maschine M zeigt. Der Path /f/s definiert einen spezifischen Bearbeitungsschritt, beispielsweise die Subroutine s der Funktion f, welcher durch die Maschine vorzunehmen ist.

In einer zweiten Form ist die URI gemäss dem Schema Z.local/f/s ausgebildet. Dadurch wird spezifiziert, dass die für die Bearbeitung eines Objekts erforderliche Resource lokal auf einer Zentrale Z definiert ist. Dies wird durch die Authority Z.local spezifiziert, welche auf die Zentrale Z zeigt. Der Path /f/s definiert einen spezifischen Bearbeitungsschritt, beispielsweise die Subroutine s der Funktion f, welcher durch die Zentrale Z vorzunehmen ist. In einer Variante definiert der Path /f/s die Abfrage von Bearbeitungsparametern, welche für die Bearbeitung des Objekts zur Anwendung kommen sollen.

In einer dritten Form ist die URI gemäss dem Schema G.name.net/f/s ausgebildet. Dadurch wird spezifiziert, dass die für die Bearbeitung eines Objekts erforderliche Resource auf einem Netzwerkserver S definiert ist. Dies wird durch die Authority s.name.net spezifiziert, welche auf den Netzwerkserver S zeigt, der sich im Domain name des Toplevel-Domains net befindet. Der Path /f/s definiert einen spezifischen Bearbeitungsschritt, beispielsweise die Subroutine s der Funktion f, welcher durch den Netzwerkserver S vorzunehmen ist. In einer Variante definiert der Path /f/s die Abfrage eines Bearbeitungswertes, welcher für die Bearbeitung des Objekts zur Anwendung kommen soll.

In Figur 1 bezeichnen die Bezugszeichen B1, B2, B3 unterschiedliche Bereiche, welche Maschinen M1, M2, ... umfassen, die für die Bearbeitung von Objekten O1, O2, ... vorgesehen sind. Die in Figur 1 dargestellten Bereiche mit den Bezugszeichen B1, B3 sind nur rudimentär ersichtlich, umfassen jedoch wie der mit Bezugszeichen B2 dargestellte Bereich jeweils Maschinen, Zentrale, Fördervorrichtung, etc.

Wie in Figur 1 dargestellt, umfasst der mit Bezugszeichen A2 dargestellte Bereich verschiedene Maschinen M1, M2, ..., welche für die Bearbeitung von Objekten O1, O2, ... vorgesehen sind. Wie durch den Pfeil angedeutet, werden die Objekte O1, O2, ... durch eine Fördervorrichtung an Arbeitsbereichen A1, A2, ... der Maschinen M1, M2, ... vorbeigeführt. Die Maschinen M1, M2, ... sind eingerichtet, ein Objekt O1, O2, ... zu bearbeiten, welches sich im Arbeitsbereich A1, A2, ... der Maschine M1, M2, ... befindet. Die Bearbeitung eines Objekts O1, O2, ... umfasst beliebige Bearbeitungsschritte, wie z.B. das Einstecken einer Beilage in eine Zeitung, das Einfüllen eines Kundenartikels in ein Kundenbehältnis, das Anordnen eines Versandartikels in einem Versandbehälter, etc.

In Figur 1 sind schematisch insgesamt fünf Maschinen M1, M2, M3, M4, M5 dargestellt, welche für die Bearbeitung von insgesamt zehn Objekten O1, O2, O3, O4, O5, O6, O7, O8, O9, O10 vorgesehen sind. Während sich wie in Figur 1 dargestellt die Objekte O2, O4, O6, O8, O10 mit einer geraden Zahl im Bezugszeichen jeweils im Arbeitsbereich der betreffenden Maschine M1, M2, M3, M4, M5 befinden, befinden sich die Objekte O1, O3, O5, O7, O9 mit einer ungeraden Zahl im Bezugszeichen zwischen bzw. im Ablauf vor den Maschinen M1, M2, M3, M4, M5. Die regelmässige Anordnung der Maschinen M1, M2, M3, M4, M5 und Objekte O1, O2, O3, O4, O5, O6, O7, O8, O9, O10 ist keine Voraussetzung für das erfindungsgemässe Verfahren. Im Falle des Einsteckens von Beilagen in eine Zeitung, dem Einfüllen von Kundenartikel in Kundenbehältnisse, dem Anordnen eines Versandartikels in einem Versandbehälter, etc. ist die regelmässige Abfolge von Objekten O1, O2, O3, O4, O5, O6, O7, O8, O9, O10 jedoch häufig anzutreffen.

Wie in Figur 1 schematisch dargestellt, wird das Objekt mit Bezugszeichen O2 von der Maschine mit Bezugszeichen M1 bearbeitet. Durch die Maschine M1 wird beispielsweise geprüft, ob das Objekt O2 für die Bearbeitung durch nachfolgende Maschinen M2, M3, ... geeignet ist. Die erste Maschine M1 greift auf den Prozessschlüssel PS2 des Objekts O2 zu und wertet die im Prozessschlüssel PS2 enthaltene URI aus. Durch die Auswertung kann die Maschine M1 entscheiden, ob das Objekt O2 für die Bearbeitung durch die weiteren Maschinen geeignet ist und entsprechende Massnahmen vornehmen, wie beispielsweise das weiterleiten an die nachfolgende Maschine mit dem Bezugszeichen M2 oder das Entfernen des Objekts O2 aus der Förderstrecke.

Im Rahmen der Erfindung werden die Objekte O1, O2, ... durch die Maschinen M1, M2, ... bearbeitet. Dieses Bearbeiten kann eine physische Veränderung eines oder mehrerer Objekte, beispielsweise das Beschneiden der Objekte in einer Schneidstation, oder eine relative Umstrukturierung der Objekte umfassen, wie beispielsweise das Beifügen eines Objektes Om zu einem Objekt On oder die Veränderung der Reihenfolge von Objekten von beispielsweise einer Gruppe Om-On-Op zu einer Gruppe Om-Op-On.

In einer Variante ist die Maschine mit dem Bezugszeichen M1 vorgesehen, das Objekt mit dem Bezugszeichen O2 zu bearbeiten. Bei der im Prozessschlüssel PS2 des Objekts O2 enthaltenen URI handelt es sich um eine URI der oben definierten ersten Form, d.h. beispielsweise um die URI M.local/f/s. Die für die Bearbeitung des Objekts notwendigen Bearbeitungsparameter sind allesamt auf der Maschine M1 definiert.

Wie in Figur 1 schematisch dargestellt, ist die Maschine mit dem Bezugszeichen M2 vorgesehen, das Objekt O4 zu bearbeiten. Bei der im Prozessschlüssel PS4 des Objekts O4 enthaltenen URI handelt es sich um eine URI der oben definierten zweiten Form, d.h. beispielsweise um die URI Z.local/f/s. Die für die Bearbeitung des Objekts notwendigen Bearbeitungsparameter sind in der Zentrale Z definiert. Durch Zugriff auf die in der Zentrale Z enthaltenen Resource stehen der Maschine M2 die Bearbeitungsparameter zur Verfügung, welche zur Bearbeitung des Objekts O4 erforderlich sind.

Wie in Figur 1 schematisch dargestellt, ist der Maschine mit dem Bezugszeichen M3 ein Datenspeicher D3 zugeordnet, beispielsweise an der Maschine M3 angeschlossen. Die Maschine M3 ist vorgesehen, das Objekt mit dem Bezugszeichen O6 zu bearbeiten. Bei der im Prozessschlüssel PS6 des Objekts O6 definierten URI handelt es sich um eine URI der oben definierten ersten Form, d.h. beispielsweise um die URI m.local/f/s. Die für die Bearbeitung des Objekts notwendigen Bearbeitungsparameter sind allesamt auf der Maschine M3 definiert. Die Maschine M3 ist zusätzlich eingerichtet, die Protokolldaten zu erfassen, welche bei der Bearbeitung eines Objekts O6 anfallen, beispielsweise Qualitätsparameter der Bearbeitung. Die Protokolldaten können im Datenspeicher D3 abgespeichert werden. Es kann vorgesehen sein, die Protokolldaten an die Zentrale Z unmittelbar, nach Ablauf eines Zeitintervalls, auf Anfrage, etc. zu übermitteln. Aufgrund der Protokolldaten kann die Zentrale beispielsweise Steuerungsbefehle an beteiligte Maschinen M1, M2, M3, M4, M5 übermitteln. In einer Variante können die Protokolldaten im Prozessschlüssel PS6 des Objekts O6 abgespeichert werden, beispielsweise durch Aufdrucken oder Ergänzen eines am Objekt O6 aufgedruckten optischen Codes, durch Abspeichern der Daten in einem funkbasiert zugreifbaren RFID-Tag, etc.

Wie in Figur 1 schematisch dargestellt, ist die Maschine mit dem Bezugszeichen M4 vorgesehen, das Objekt O8 zu bearbeiten. Bei der im Prozessschlüssel PS8 des Objekts O8 enthaltenen URI handelt es sich um eine URI der oben definierten dritten Form, d.h. beispielsweise um die URI G.name.net/f/s. Die für die Bearbeitung des Objekts O8 notwendigen Bearbeitungsparameter sind global zugreifbar definiert. Durch Zugriff auf die global definierte Resource stehen der Maschine M4 die Bearbeitungsparameter zur Verfügung, welche zur Bearbeitung des Objekts O8 erforderlich sind.

Wie in Figur 1 schematisch dargestellt, ist die Maschine mit dem Bezugszeichen M5 vorgesehen, das Objekt O10 zu bearbeiten. Bei der im Prozessschlüssel PS10 des Objekts O10 enthaltenen URI handelt es sich um eine URI der oben definierten zweiten Form, d.h. beispielsweise um die URI Z.local/f/s. Die für die Bearbeitung des Objekts O10 erforderlichen Bearbeitungsparameter werden bei der Zentrale Z abgefragt. Wie in Figur 1 schematisch dargestellt, ist in der Zentrale Z ein Verweis auf eine global verfügbare Resource hinterlegt. Wie in Figur 1 schematisch dargestellt, werden die erforderlichen Bearbeitungsparameter der Maschine M5 von der globalen Resource G zur Verfügung gestellt.

Die Bereiche B1, B2, B3, welche die für die Bearbeitung von Objekten O1, O2, ... erforderlichen Maschinen M1, M2, ... aufweisen, beziehen sich oftmals auf Standorte wie einen Produktionsbetrieb, Logistikbetrieb, etc., welche in sich geschlossen sind. Im Stand der Technik ist es deshalb erforderlich, in diesen Bereichen jeweils die gesamten für die Bearbeitung von Objekten erforderlichen Parameter an diesen Standorten zur Verfügung zu stellen. Beispielsweise im Falle der Herstellung von adressierten Druckprodukten muss die gesamte Adressdatensammlung im betreffenden Bereich B1, B2, B3 zur Verfügung gestellt sein.

Dies ist bei dem in Figur 1 schematisch dargestellten Verfahren nicht erforderlich, da erforderliche Adressdaten jeweils durch die betreffende Maschine durch Zugriff auf die im Prozessschlüssel abgespeicherten URI erfolgen kann. Beispielsweise ist die in Figur 1 dargestellte Maschine mit dem Bezugszeichen M4 für den Aufdruck einer Adresse vorgesehen. Durch den (gesicherten) Zugriff auf die global verfügbare Resource G können die für das Objekt mit Bezugszeichen O8 erforderlichen Adressdaten der Maschine M4 zur Verfügung gestellt werden. Auf der Maschine M4 oder im Bereich B2 ist somit nie eine gesamte Adressdatensammlung vorhanden, sondern jeweils nur einzelne, für ein bestimmtes Objekt O8 erforderliche Adressdaten. Ferner kann durch den Zugriff mit der URI auf die global verfügbare Resource G einfacher sichergestellt werden, dass die Adressdaten aktuell sind, beispielsweise indem der Empfänger mit den betreffenden Adressdaten mittels Personalcomputer PC die global verfügbare Resource G bei Bedarf nachführt, wie schematisch in Figur 1 dargestellt.

Im in Figur 1 schematisch dargestellten Verfahren ist es möglich, dass ein Benutzer zur Zeit der Bearbeitung der Objekte O1, O2, ... durch die Maschinen M1, M2, ... in der globalen Resource G gewünschte Änderungen vornimmt, welche bei der Bearbeitung eines Objekts O1, O2, ... unmittelbar zur Anwendung kommen. Beispielsweise kann der Benutzer durch Zugriff über einen Personalcomputer PC auf die global verfügbare Resource G ändern bis kurz vor der Bearbeitung des Objekts mit Bezugszeichen O8 durch die Maschine mit dem Bezugszeichen M4. Da die Maschine M4 über die URI auf die globale Resource G zur Bearbeitung des Objekts O8 auf die globale Resource G zugreift, liegen der Maschine die jeweils aktuellen Bearbeitungsparameter zur Bearbeitung des Objekts O8 vor (Beispiel: kurzfristige Änderungen eines Auftrags, z.B. keine Beilagen mehr betreffend Sport, aber neue Beilagen betreffend Kultur).

Im in Figur 1 schematisch dargestellten Verfahren ist es möglich, sensitive Informationen vor unerwünschtem Zugriff zu schützen. Dies wird beispielsweise durch den am Beispiel der Maschine mit Bezugszeichen M5 dargestellten Zugriff ermöglicht. In der Zentrale Z ist mit einem Verweis nur hinterlegt, welche globale Resource G für die Lieferung von Bearbeitungsparametern zuständig ist. Die Bearbeitungsparameter werden von der globale Resource G direkt an die Maschine M5 übermittelt, ohne dass die Zentrale Z involviert ist (Beispiel: kundenspezifische Beilagen, welche auf einer Analyse von Kundendaten basiert, die der Zentrale Z nicht zugänglich sein sollen).

## Patentansprüche

1. Verfahren zur Steuerung von Maschinen (M1, M2, ...), welche für die Bearbeitung von Objekten (O1, O2, ...) vorgesehen sind, umfassend:
Einbringen eines Objekts (O1, O2, ...) in einen Arbeitsbereich einer Maschine (M1, M2, ...);
Zugreifen in einer lokalen Umgebung der Maschine (M1, M2, ...) mit einem Lesegerät auf einen dem Objekt (O1, O2) zugeordneten Prozessschlüssel (PS1, PS2, ...), welcher zumindest einen Unified Resource Identifier (URI) enthält; wobei der Unified Resource Identifier auf eine zentrale Ressource zeigt, die in einer den Maschinen zugeordneten Zentrale (Z) definiert ist, und wobei die zentrale Ressource einen Verweis enthält, der auf eine globale Ressource (G) zeigt, die global zugreifbar ist;
Bearbeitung des Objekts (O1, O2, ...) durch die Maschine unter Verwendung des im Prozessschlüssel (PS1, PS2, ...) enthaltenen Unified Resource Identifiers (URI); wobei zur Bearbeitung des Objekts auf die globale Ressource zugegriffen wird, auf welche der Verweis zeigt, welcher in der zentralen Ressource enthalten ist, auf welche der im Prozessschlüssel enthaltene Unified Resource Identifier zeigt.

2. Verfahren nach Anspruch 1, wobei der Unified Resource Identifier (URI) auf eine lokale Resource zeigt, die in einer lokalen Umgebung der Maschinen (M1, M2, ...) definiert ist.

3. Verfahren nach Anspruch 1 oder 2, wobei der Unified Resource Identifier (URI) auf eine Resource zeigt, die für die Bearbeitung des Objekts (O1, O2, ...) erforderliche Bearbeitungsparameter enthält.

4. Verfahren nach einem der Ansprüche 1 bis 3, wobei der Unified Resource Identifier (URI) auf eine gesicherte Resource zeigt, welche für den Zugriff eine Authentifizierung und/oder einen elektronischen Schlüssel erfordert.

5. Verfahren nach einem der Ansprüche 1 bis 4, weiter umfassend: Abspeichern von Daten im Prozessschlüssel (PS1, PS2, ...) und/oder in der Resource, auf welche der im Prozessschlüssel (PS1, PS2, ...) enthaltene Unified Resource Identifier (URI) zeigt.

6. Verfahren nach einem der Ansprüche 1 bis 5, wobei das Einbringen eines Objekts in den Arbeitsbereich einer Maschine durch ein Fördermittel oder einen Förderer erfolgt.

7. Verfahren nach einem der Ansprüche 1 bis 5, wobei das Einbringen eines Objekts in den Arbeitsbereich einer Maschine durch ein Förderband oder einen Hängeförderer erfolgt.

8. Verfahren nach einem der Ansprüche 1 bis 7, wobei auf einen am Objekt (O1, O2, ...) angebrachten Prozessschlüssel (PS1, PS2, ...) zugegriffen wird.

9. Verfahren nach einem der Ansprüche 1 bis 7, wobei auf einen am Objekt (O1, O2, ...) angebrachten Prozessschlüssel (PS1, PS2, ...) in Form eines optisch lesbaren ein- oder zweidimensionalen Barcodes und/oder eines funkbasiert lesbaren RFID-Tags zugegriffen wird.

10. Verfahren nach einem der Ansprüche 1 bis 8, wobei bei der Bearbeitung des Objekts (O1, O2, ...) diesem mindestens ein weiteres Objekt hinzugefügt wird.

11. Verfahren nach einem der Ansprüche 1 bis 9, wobei mindestens zwei Maschinen (M1, M2, ...) an getrennten Bereichen (B1, B2, B3) beteiligt sind.

12. Verfahren nach einem der Ansprüche 1 bis 10, wobei das Objekt (O1, O2, ...) ein Hauptprodukt oder ein dem Hauptprodukt hinzuzufügendes Teilprodukt einer Produktzusammenstellung ist.

13. Verfahren nach einem der Ansprüche 1 bis 11, wobei das Objekt (O1, O2, ...) ein Kundenbehältnis oder ein dem Kundenbehältnis hinzuzufügender Kundenartikel einer Produktzusammenstellung ist.

## Claims

1. A method for controlling machines (M1, M2, ...), which are provided for the processing of objects (O1, O2, ...), comprising:
introducing an object (O1, O2, ...) into a working region of a machine (M1, M2, ...);
accessing, in a local environment of the machine (M1, M2, ...), with a reading device a process key (PS1, PS2, ...), which is associated with the object (O1, O2, ...) and which contains at least one Unified Resource Identifier (URI); wherein the Unified Resource Identifier points to a central resource that is defined in a center (Z) associated with the machines, and wherein the central resource contains a reference pointing to global resource (G) that is globally accessible;
processing the object (O1, O2, ...) with the machine using the Unified Resource Identifier (URI) contained in the process key (PS1, PS2, ...); wherein for the processing of the object the global resource is accessed, to which the reference contained in the central resource points, to which the Unified Resource Identifier contained in the process key points.

2. The method according to claim 1, wherein the Unified Resource Identifier (URI) points to a local resource that is defined in a local environment of the machines (M1, M2, ...).

3. The method according to claim 1 or 2, wherein the Unified Resource Identifier (URI) points to a resource that contains processing parameters required for the processing of the object (O1, O2, ...).

4. The method according to one of claims 1 to 3, wherein the Unified Resource Identifier (URI) points to a secured resource, which requires an authentication and/or an electronic key for the access.

5. The method according to one of claims 1 to 4, furthermore comprising: storing data in the process key (PS1, PS2, ...) and/or in the resource to which the Unified Resource Identifier (URI) contained in the process key (PS1, PS2, ...) points.

6. The method according to one of claims 1 to 5, wherein the introduction of an object into the working region of a machine is performed by a conveyor means or a conveyor.

7. The method according to one of claims 1 to 5, wherein the introduction of an object into the working region of a machine is performed by a conveyor belt or a hanging conveyor.

8. The method according to one of claims 1 to 7, wherein a process key (PS1, PS2, ...) attached to the object (O1, O2, ...) is accessed.

9. The method according to one of claims 1 to 7, wherein a process key (PS1, PS2, ...) attached to the object (O1, O2, ...) in the form of an optically readable one-dimensional or two-dimensional barcode and/or a radio-based readable RFID tag is accessed.

10. The method according to one of claims 1 to 8, wherein, during the processing of the object (O1, O2, ...), at least one further object is added thereto.

11. The method according to one of claims 1 to 9, wherein at least two machines (M1, M2, ...) participate at separate regions (B1, B2, B3).

12. The method according to one of claims 1 to 10, wherein the object (O1, O2, ...) is a main product or a partial product to be added to the main product of a product compilation.

13. The method according to one of claims 1 to 11, wherein the object (O1, O2, ...) is a customer container or a customer article to be added to the customer container of a product compilation.

## Revendications

1. Procédé de commande de machines (M1, M2, ...), lesquelles sont prévues pour le traitement d'objets (O1, O2, ...), comprenant :
l'introduction d'un objet (O1, O2, ...) dans une zone de travail d'une machine (M1, M2, ...);
l'accès, dans un environnement local de la machine (M1, M2, ...) au moyen d'un appareil de lecture, à une clé de processus (PS1, PS2, ...) associée à l'objet (O1, O2), laquelle clé de processus contient au moins un identifiant uniforme de ressource (URI) ; l'identifiant uniforme de ressource pointant vers une ressource centrale qui est définie dans une centrale (Z) associée aux machines, et la ressource centrale contenant une référence qui pointe vers une ressource globale (G) qui est accessible globalement ;
le traitement de l'objet (O1, O2, ...) par la machine en utilisant l'identifiant uniforme de ressource (URI) contenu dans la clé de processus (PS1, PS2, ...) ; le traitement de l'objet étant effectué par l'accès à la ressource globale vers laquelle pointe la référence, laquelle est contenue dans la ressource centrale vers laquelle pointe l'identifiant uniforme de ressource contenu dans la clé de processus.

2. Procédé selon la revendication 1, dans lequel l'identifiant uniforme de ressource (URI) pointe vers une ressource locale qui est définie dans un environnement local des machines (M1, M2, ...).

3. Procédé selon la revendication 1 ou 2, dans lequel l'identifiant uniforme de ressource (URI) pointe vers une ressource qui contient des paramètres de traitement nécessaires au traitement de l'objet (O1, O2, ...).

4. Procédé selon l'une des revendications 1 à 3, dans lequel l'identifiant uniforme de ressource (URI) pointe vers une ressource sécurisée qui nécessite pour l'accès une authentification et/ou une clé électronique.

5. Procédé selon l'une des revendications 1 à 4, comprenant en outre : la sauvegarde des données dans la clé de processus (PS1, PS2, ...) et/ou dans la ressource vers laquelle pointe l'identifiant uniforme de ressource (URI) contenu dans la clé de processus (PS1, PS2, ...).

6. Procédé selon l'une des revendications 1 à 5, dans lequel l'introduction d'un objet dans la zone de travail d'une machine est effectuée par un moyen de transport ou un transporteur.

7. Procédé selon l'une des revendications 1 à 5, dans lequel l'introduction d'un objet dans la zone de travail d'une machine est effectuée par une bande transporteuse ou un transporteur de suspension.

8. Procédé selon l'une des revendications 1 à 7, dans lequel on accède à une clé de processus (PS1, PS2, ...) fixée à l'objet (O1, O2, ...).

9. Procédé selon l'une des revendications 1 à 7, dans lequel on accède à une clé de processus (PS1, PS2, ...) fixée à l'objet (O1, O2, ...) sous la forme d'un code barre unidimensionnel ou bidimensionnel lisible optiquement et/ou d'étiquettes RFID lisibles par radio.

10. Procédé selon l'une des revendications 1 à 8, dans lequel au moins un autre objet est ajouté à l'objet (O1, O2, ...) lors de son traitement.

11. Procédé selon l'une des revendications 1 à 9, dans lequel au moins deux machines (M1, M2, ...) sont impliquées dans des zones distinctes (B1, B2, B3).

12. Procédé selon l'une des revendications 1 à 10, dans lequel l'objet (O1, O2, ...) est un produit principal ou un sous-produit, à ajouter au produit principal, d'un assemblage de produits.

13. Procédé selon l'une des revendications 1 à 11, dans lequel l'objet (O1, O2, ...) est un contenant client ou un article client, à ajouter au contenant client, d'un assemblage de produits.
